# EUROPÄISCHE PATENTSCHRIFT

(11) **EP 0 911 628 B1**
(45) Veröffentlichungstag und Bekanntmachung des Hinweises auf die Patenterteilung: **08.08.2001**
(21) Anmeldenummer: 98117103.6
(22) Anmeldetag: 10.09.1998
(51) Int. Cl.: G01N 27/22

(54) **Sensor zur Wassergehaltsbestimmung**
Sensor for determining water content
Capteur pour la détermination de la teneur en eau

(30) Priorität: 10.10.1997 DE 19744784
(43) Veröffentlichungstag der Anmeldung: 28.04.1999
(73) Patentinhaber: GSF-Forschungszentrum für Umwelt und Gesundheit GmbH, 85764 Neuherberg (DE)
(72) Erfinder: Ruth, Bernhard, Dr., 85748 Garching (DE)

(56) Entgegenhaltungen:
- EP-A- 0 622 628
- GB-A- 2 256 489
- US-A- 3 424 977
- US-A- 4 502 044
- SHEIRETOV Y ET AL: "Dielectrometry measurements of spatial moisture profiles in oil-impregnated pressboard" PROCEEDINGS OF THE 4TH INTERNATIONAL CONFERENCE ON PROPERTIES AND APPLICATIONS OF DIELECTRIC MATERIALS (IEEE CAT. NO.94CH3311-8), Bd. 2, 1994, Seiten 701-704, XP000749804 ISBN 0-7803-1307-0
- FROLOV G V ET AL: "A quasibalancing dielectric water-content meter for powdery building materials" MEASUREMENT TECHNIQUES, Bd. 27, Nr. 5, Mai 1984, Seiten 468-470, XP002091082 ISSN 0543-1972
- AMATO M ET AL: "Small spatial scale soil water content measurement with time-domain reflectometry " SOIL SCIENCE SOCIETY OF AMERICA JOURNAL, Bd. 59, 1995, Seiten 325-329, XP002091083 ISSN 0361-5995

## Beschreibung

Die Erfindung betrifft einen Sensor zur Wassergehaltsbestimmung nach dem Oberbegriff des Patentanspruchs 1.

Die Ermittlung des Bodenwassergehaltes mit einfachen Mitteln ist nicht nur von wissenschaftlichem, sondern auch von kommerziellem Interesse. Darüber hinaus kommt es auch bei der Lagerung und Verarbeitung von Materialien auf die Kontrolle des Wassergehaltes an.

Die vergleichsweise hohe Dielektrizitätskonstante für Wasser von ε=80 legt es nahe, den Wassergehalt von Böden und anderen Materialien durch die Messung der Dielektrizitätskonstante des betroffenen Materials zu bestimmen. Trockene Böden haben eine Dielektrizitätskonstante zwischen 2 und 5, die damit deutlich kleiner als die von Wasser ist.

Da sich Kapazitätsmessungen zur Bestimmung der Dielektrizitätskonstante mit hoher Genauigkeit durchführen lassen, sind die Messungen selbst ohne Schwierigkeit im Labor und mit tragbaren Geräten möglich.

Die Probleme sind aber deshalb vorhanden, weil die Proben bei der Entnahme und bei dem Einbringen in die Meßapparatur in ihrem strukturellen Aufbau und ihrem Wassergehalt gestört werden. Bei Sonden, die auf dem Boden aufgesetzt oder in den Boden eingestochen werden, spielt die Kopplung zwischen Boden und Sonde eine große Rolle. Insbesondere Luftspalte oder ein Wasserfilm zwischen elektrode und Boden verfälschen die Messung.

Eine häufig genutzte Messmöglichkeit besteht darin, die Kapazität eines Kondensators zu bestimmen, der den feuchten Boden als Dielektrikum einschließt (de Plater 1955). Die Kapazität, die den Wassergehalt anzeigt, kann durch die Resonanzfrequenz bestimmt werden. Diese Methoden wird durch den Ausdruck "Kapazitätsmethode" zusammengefaßt(Wobschall 1978, Dean et al. 1987, Nadler & Lapid 1996).

Häufig werden hohe Frequenzen im Bereich zwischen 1 MHz und 5 GHz eingesetzt. Das hat den Vorteil, daß die Leitfähigkeit keine Rolle mehr spielt und damit der Wassergehalt selektiver erfasst wird (H. Fellner-Feldegg 1969, Smith & Mullins 1991)

Im hohen Frequenzbereich wird im Allgemeinen nicht mehr die Kapazität direkt gemessen, sondern Laufzeiten von Impulsen im ns-und ps-Bereich entlang von elektrischen Leitern (Time-Domain) (H. Fellner-Feldegg 1969).

Eine Weiterentwicklung in Form der TDR-Methode (time-domain-reflectometry) besteht darin, daß Laufzeit und Reflexion eines elektrischen Impulses in einem Leitungspaar ausgenutzt wird (Topp et al. 1982, Dasberg & Dalton 1985). Die Laufzeit und die Reflexion des Impulses werden durch das Dielektrikum beeinflußt, das das Leiterpaar umgibt. Um die räumliche Auflösung zu verbessern, werden kleinere Ausführungen der TDR-Sonde genutzt (Amato & Ritchie 1995; Kelly et al. 1995).

Wenn man nun den geometrischen Aufbau der Elektroden für die Bestimmung des Wassergehalts nach der Kapazitätsmethode betrachtet, ergibt sich folgendes Bild:

Plattenkondensator und ringförmiger Kondensator werden für den Fall benutzt, daß Proben entnommen werden und in eine Meßkammer eingebracht werden (Wobschall 1978, Sarabandi & Li 1994). Zylindersymmetrische Anordnungen, die dem Koaxialkabel entsprechen, werden ebenfalls als Probenräume benutzt (Fellner-Feldegg 1969, Topp et al. 1982).

Für in-situ-Messungen werden Plattenkondensatoren in verschiedener Anordnung (de Plater 1955, Dean et al. 1987)) und zwei oder drei parallele Stäbe (Dasberg & Dalton 1985, Nadler & Lapid 1996) oder ringförmige bzw. zylinderförmige Anordnungen (Campbell 1990, Ould Mohamed 1997) benutzt, die in den Boden eingestochen oder aufgesetzt (Brisco et al. 1992) werden können.

Neben den angegebenen Methoden gibt es noch eine Reihe von anderen Methoden wie Leitfähigkeit, Neutronenstreuung oder tensiometrische Methoden, die aber keinen direkten Bezug zur kapazitiven Messung haben (Schmugge et al. 1980, Smith & Mullins 1991, Gardner et al. 1991).

### Kritik am Stand der Technik:

Die räumliche Auflösung der Sonden erreicht keine Werte unter 1 cm. Die kleinste Ausführung der TDR-Sonden wird durch Amatso & Ritchi (1995) beschrieben. Dabei ist die Länge der Sondenstäbe 21 mm und deren Abstand 14 mm, so daß für die zeitliche Auflösung des elektrischen Impulses 100 ps und weniger notwendig sind. Kelly et al. (1995) befassen sich speziell mit diesem Problem und zeigen, dass auch mit einer gesteigerten Bandbreite der Messapparatur (20 GHz) keine bessere räumliche Auflösung zu erzielen ist. Sie belegen, dass insbesondere bei trockenen Böden die Genauigkeit aufgrund der niedrigen Laufzeiten abnimmt. Da diese zeitliche Auflösung nicht ohne weiteres gesteigert werden kann, ist die räumliche Auflösung für die TDR-Methode auf etwa 1 cm beschränkt.

Wird eine Sonde mit Koaxialgeometrie senkrecht auf den Boden aufgesetzt, dann beeinflußt der Bodenwassergehalt bis zu einer Tiefe von 1 cm das Meßsignal (Brisco et a. 1992).

Aufgrund der räumlichen Struktur des Bodens mit Aggregatgrößen im Bereich zwischen cm und µm und entsprechenden Poren zwischen den Aggregaten, variiert die Bodenfeuchtigkeit aber auch im mm-und um-Bereich. Außerdem ändert sich der Bodenwassergehalt beträchtlich, wenn man sich der Bodenoberfläche oder anderen Grenzflächen nähert (Behälterflächen). Wie die Arbeiten von Amatso & Ritchi (1995) und Kelly et al. (1995) darlegen, ist eine Steigerung der räumlichen Auflösung von Vorteil.

Darüber hinaus muß berücksichtigt werden, daß allein die Größe einer Sonde und deren Gehäuse die Bodenstruktur ändert und damit auch die Feuchtigkeitsverteilung. Jeder Fremdkörper im Boden erzeugt eine entsprechende "Großpore", so dass man zu einem nicht unbeträchtlichen Anteil die Feuchtigkeit in der Großpore bestimmt. Deshalb sind möglichst kleine Sonden und Gehäuse von Vorteil. Außerdem wird der Wasserfluß deutlich beeinträchtigt. Fremdkörper wirken als Sperre für die Wasserbewegung nach unten und oben. Andererseits führt eine senkrecht eingestochene Sonde, z.B. die TDR-Sonde in ihrer typischen Anwendung oder die Zugangsrohre mit einigen cm Durchmesser, zu einer Erleichterung des Wasserflusses entlang der Sonde und damit zu einer Verfälschung des gemessenen Bodenwassergehaltes in den verschiedenen Bodentiefen im Vergleich zur ungestörten Situation (Topp et al. 1982, Dean et al. 1987, Evett & Steiner 1995, Ould Mohamed 1997).

Bei der Kontrolle der Bewässerung von Pflanzen spielt insbesondere die Messung des niedrigen Wassergehalts eine große Rolle. Die TDR-Sonde hat aber genau in diesem Bereich ihre größten relativen Messfehler (Kelly et al. 1995).

Schrumpfen und Schwellen des Bodens während der Trocknung und Wiederbefeuchtung führen zu Rissen. Da feste Fremdkörper diese Prozesse nicht mitmachen, treten diese Risse bevorzugt an deren Oberfläche auf. Das wiederum führt zu einem Luftspalt und bei Wiederbefeuchten zu einem Wasserfilm. Beides verfälscht die Messungen (Smith & Mullins 1991).

Im Allgemeinen wird die Resonanzfrequenz bestimmt und daraus der relative volumetrische Wassergehalt aufgrund einer Kalibrierung errechnet. Bei der TDR-Methode kann aus der Phasenverschiebung noch eine Zusatzinformation über die Leitfähigkeit erhalten werden (Campbell 1990, Smith & Mullins 1991). Weitere Zusatzinformation, z.B. über die Aggregatgröße wäre von Vorteil.

Der Wassergehalt im Boden ändert sich laufend, auch in Abhängigkeit von der Tiefe. Deshalb sind kontinuierliche Messungen vorteilhaft. Darüber hinaus sollte die Sonde auch über mehrere Monate stabil sein, weil auch Langzeitmessungen notwendig sind und weil der Boden einige Zeit braucht, bis er nach Einbringen der Sonde seine natürliche Struktur erreicht (Nadler & Lapid 1996). Die Sonde sollte also nicht zu häufig gewechselt werden müssen.

Da für die Erfassung der räumlichen Variabilität eine gewisse Anzahl von Sonden notwendig ist, spielt der Preis eine Rolle.

Aufgabe der Erfindung ist es, einen Sensor der e. g. Art so auszugestalten, daß er bei einfachem Aufbau eine hohe Ortsauflösung besitzt aber keine Störung des Wasserstroms verursacht.

Gelöst wird diese Aufgabe durch die Merkmale des Patentanspruchs 1, die Unteransprüche beschreiben vorteilhafte Ausgestaltungen der Erfindung. Ein Sensor gemäß dem Oberbegriff des Anspruchs 1 ist aus dem Dokument US-A-4502044 bekannt.

Die Erfindung wird im folgenden anhand von Ausführungsbeispielen mit Hilfe der Figuren näher erläutert.

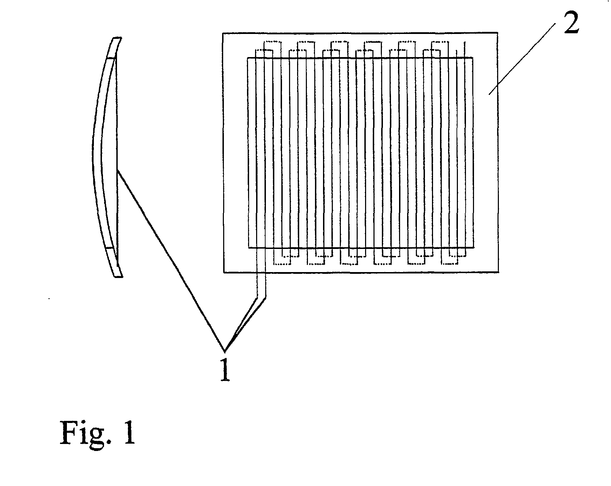

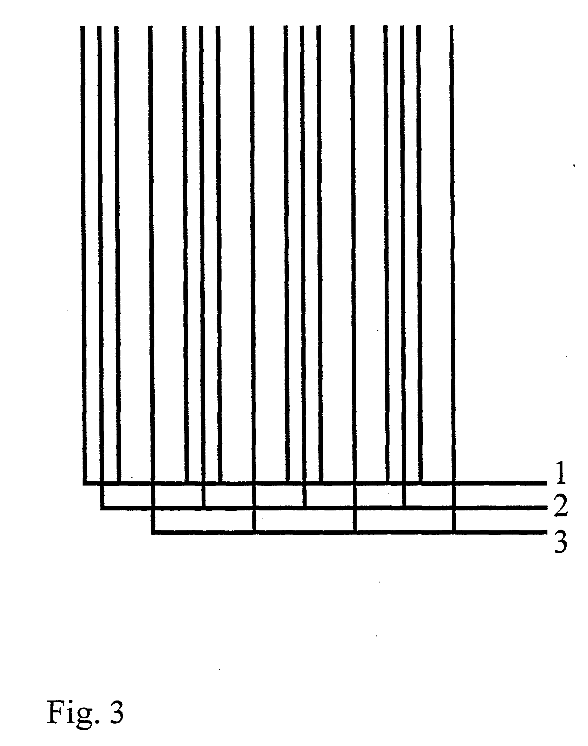

Dabei zeigen die Fig. 1 und 3 verschiedene Ausbildungen des Sensors.

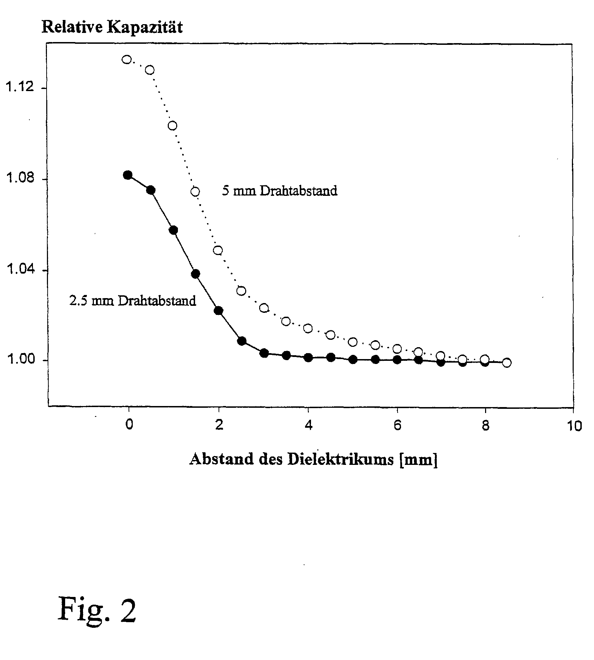

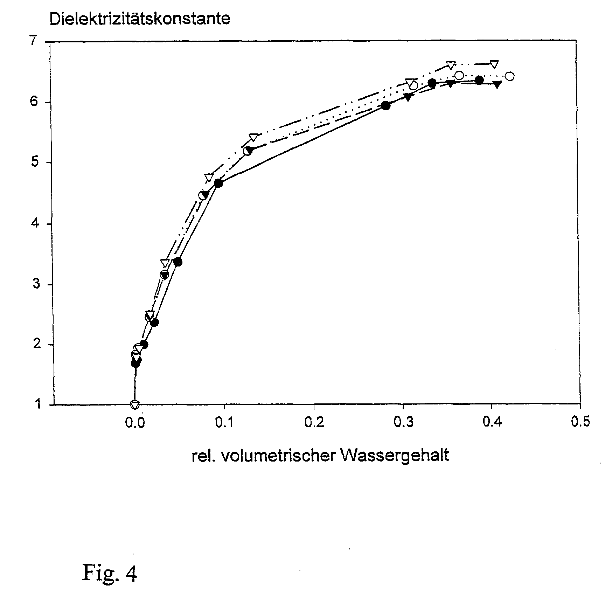

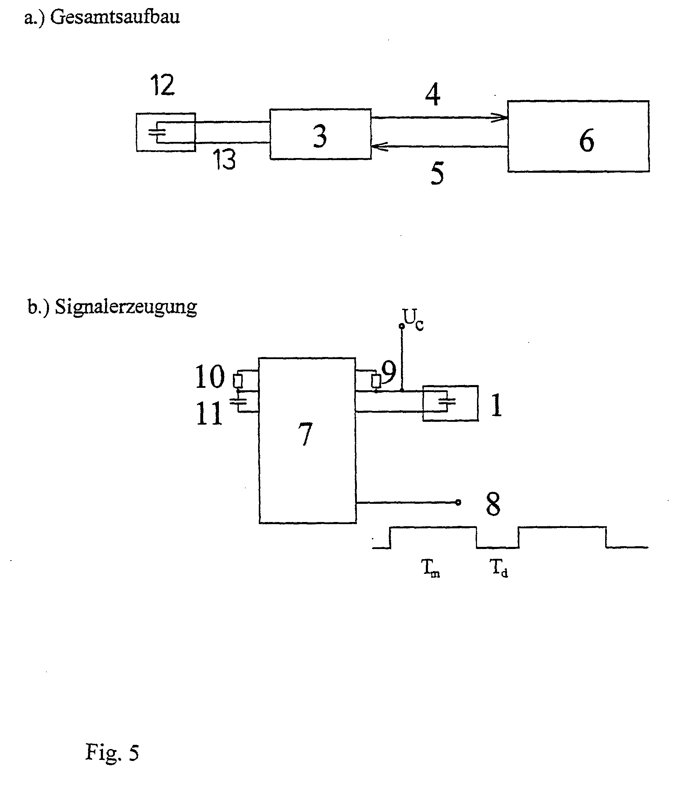

Die Fig. 2 und 4 zeigen die Abhängigkeit der Kapazität als Funktion von Abstand und Verteilung des Dielektrikums und vom Abstand der Kondensatorelektroden. Die Fig. 5 zeigt eine Ausweiteelektronik.

### Anordnung der Kondensatorelektroden

In Fig. 1 ist eine weitgehend den Wasserstrom nicht störende Kondensatorausführung abgebildet. Zwei Drähte 1 bilden die Kondensatorelektroden. Sie sind in einem Rahmen 2 so gespannt, dass sie ein Gitter bilden und durch ihre Überkreuzung jeder Drahtabschnitt der einen Elektrode zwischen zwei Drahtabschnitten der anderen Elektrode liegt. Dabei deutet die durchgezogene Linie von 1 einen Verlauf oberhalb des Rahmens 2 an und die gepunktete Line einen Verlauf unterhalb von 2. Der Minimal- und Maximalabstand der Drähte 1 ist 0,1 mm beziehungsweise 5 mm. für den Einsatz im Boden ist ein Abstand von 2,5 mm optimal. Die Rahmenöffnung hat eine Größe zwischen 1 cm² und 25 cm² und es sollten zwischen 5 und 20 Drahtpaare vorhanden sein.

Der Rahmen wird waagrecht in den Boden eingebracht. Da insbesondere der Wassergehalt zwischen den Drähten die Kapazität beeinflußt, ist das effektive Messvolumen flächenförmig und liegt in der Rahmenöffnung. Wenn der Drahtdurchmesser kleiner oder höchstens gleich doppelten Drahtabstand ist, wird der Wasserfluß durch das Messvolumen nur geringfügig beeinträchtigt. Ebenso kann das verdunstete Wasser ohne Behinderung nach oben entweichen. Der Raum um den Rahmen dagegen, bei dem der Wasserfluß gestört ist, trägt nich zur Messung bei weil kein Wasser in das Rahmenmaterial eindringt und das Wasser in diesem Bereich durch Verklebung mit zusätzlichem Material nicht in die Nähe des Drahtes kommt.

Die Kapazität dieser Elektrodenanordnung hängt von der Drahtlänge und besonders vom Drahtabstand ab. Damit wird die Messgenauigkeit durch die Stabilität des Drahtabstandes bestimmt. Um diese Stabilität zu erhöhen, sind die Drähte mit einer bestimmten mechanischen Spannung an dem Rahmen befestigt. Die Spannung muß so groß sein, daß die Drähte durch die Inhomogenitäten im Boden (Aggregate verschiedener Größe, Steine) nicht aus ihrer Position verschoben werden.

Bei Schrumpfung und Schwellung des Bodens während der Trocknung und der Wiederbefeuchtung sollen aber die Drähte eine Lagekorrektur mitmachen. Es bilden sich dann in dem betrachteten Meßvolumen keine Spalten und Risse, wie es bei festen Körpern passiert. Dadurch werden die Verfälschungen durch Luftspalte und Wasserfilme vermieden. Die mechanische Spannung darf daher nicht zu groß sein, damit die Drähte der Lagekorrektur folgen können.

Durch beide Anforderungen an die Stabilität der Drähte läßt sich die mechanische Spannung quantifizieren. Ein einzelner kleiner Stein von 10 g darf nur zu einer Auslenkung von weniger als 0.1 mm führen (laterale Spannung mindestens 1 N/mm). Andererseits muß eine Kraft von z.B. 10 N, die dem Gewicht des Bodens über dem Drahtgitter entspricht, zu einer Auslenkung von 2 mm führen. Diese Auslenkung entspricht einem großen Riß im Boden bei Schrumpfung (laterale Spannung höchstens 5 N/mm). Bei einem steinigen, sehr inhomogenen Boden muß die mechanische Spannung größer sein, so daß ein Bereich von 1 N/mm bis 20 N/mm sinnvoll erscheint.

Die Spannung der Drähte kann z.B. dadurch hervorgerufen werden, daß der Rahmen während der Befestigung der Drähte in einem Schraubstock so gebogen wird, daß die entsprechende Länge um 5 % gekürzt wird (siehe Fig. 1). Nach Ende der Drahtbefestigung wird der Rahmen entspannt, so daß dadurch die Drähte selbst gespannt werden.

Die Anordnung von Fig. 1 ist auch deshalb von Vorteil, weil kleine Positionsänderungen eines Drahtes keinen Einfluß auf die Kapazität haben. Wird z.B. durch eine Inhomogenität im Boden ein Draht innerhalb der Ebene verschoben, dann nähert er sich dem benachbarten Draht der anderen Elektrode, so dass die Kapazität in diesem Bereich vergrößert wird. Gleichzeitig rückt er von dem anderen Drahtabschnitt derselben Elektrode ab, so dass in diesem Bereich die Kapazität erniedrigt wird. Obwohl die Abstandsabhängigkeit der Kapazität nicht linear ist, erfolgt ein gewisser Ausgleich.

Der Rahmen kann in geeigneter Weise durch eine gelochte Epoxy-Platine realisiert werden, da das Material eine angemessene Biegefestigkeit hat und außerdem mit Löchern für die Drähte in präzisem Abstand versehen ist.

Die Elektroden des Gitters können auch durch elasitsche Blattfedern realisiert werden. Sie sind im Ramen so angebracht, daß ihre Breitseite senkrecht steht und damit den Wasserbewegung nach oben und unten nicht behindert. Der Vorteil liegt darin, daß die Kondensatorfläche wesentlich vergrößert wird und die Messungen genauer und weniger störanfällig sind. Allerdings sollte die Blattfederbreite nicht größer sein als das fünffache des Abstandes.

### Messvolumen

Der Abstand der Elektroden in Fig. 1 bestimmt die "Dicke" des flächenhaften Messvolumens. Fig. 2 zeigt die Erniedrigung der Kapazität, wenn das Dielektrikum mit ε > 1 von der Drahtebene entfernt wird. Dabei ist das Dielektrikum der Boden eines Glasgefäßes, das mit Wasser gefüllt ist. In beiden Fällen des Drahtabstandes von 2,5 mm und 5 mm sinkt die Kapazität ab und man kann aus dem Kurvenverlauf entnehemen, dass die Halbwertsbreite etwa dem halben Drahtabstand entspricht.

Ein enger Abstand zwischen den Leitern verringert damit die Dicke des effektiven Messvolumens.

Die geringe Dicke des Messvolumens erlaubt eine hohe Auflösung der Schichten, wenn man in verschiedener Bodentiefe misst. Die flächenhafte Ausmaße von 5 cm x 5 cm in Fig. 1 ist vorteilhaft, weil der Mittelwert für bestimmte Ebenen ermittelt wird. Eine punktuelle Messung hätte den Nachteil, dass aufgrund der Aggregatstruktur des Bodens an mehreren Stellen einer Schicht gemessen werden müßte.

### Reduktion des Oberflächeneffektes

Wie schon oben angesprochen, können Fehlmessungen auftreten, wenn sich an der Elektrodenoberfläche ein Luftspalt bildet, der dann bei Wiederbefeuchten auch Raum für einen Wasserfilm bietet.

Darüber hinaus ist der Boden am Rand von Bohrlöchern verdichtet, so daß nicht der ungestörte Wassergehalt gemessen werden kann.

Es ist deshalb von Vorteil, den Wassergehalt in einem bestimmten Abstand von der Detektorfläche zu messen. Dazu dient die Elektrodenanordnung in Fig. 6. Werden im Fall A die zusammengeschalteten Leiter 1 und 2 als die eine Kondensatorelektrode betrachtet und der Leiter 3 als die andere Kondensatorelektrode, dann ist der effektive Elektrodenabstand a. Das wird dadurch hervorgerufen, daß die Leiter 1 und 2 dasselbe Potential haben und sich deshalb kein Feld zwischen ihnen aufbauen kann. Werden aber im Fall B die Leiter 1 und 3 zusammengeschaltet und bilden die erste Elektrode und Leiter 2 bildet die andere Elektrode, dann ist der Elektrodenabstand b wesentlich kleiner.

Damit werden durch die beiden Messungen verschiedene Meßvolumina erfaßt (siehe oben), wobei das Meßvolumen im Fall A wesentlich größer ist. Bei der Differenzbildung (A-B) kommt hauptsächlich das Volumen zum Tragen, das durch A erfaßt wird, nicht aber durch B.

### Isolation der Elektroden

Die Abhängigkeit der (komplexen) Dielektrizitätskonstante von der Leitfähigkeit σ ist bekannt und zeigt im Idealfall ein Absinken des imaginären Anteils proportional zu 1/σ.

Die Messungen werden hauptsächlich deshalb mit Frequenzen im MHz- und GHz-Bereich durchgeführt, weil dann die Leitfähigkeit des Bodens keine Rolle mehr spielt (H. Fellner-Feldegg 1969). Die Isolation der Elektroden bringt aber den Vorteil, daß der Einfluß der Leitfähigkeit ebenfalls drastisch reduziert wird und daß es möglich wird, bei wesentlich niedrigeren Frequenzen zu messen, die einfacher zu handhaben sind. Insbesondere werden die elektronischen Komponenten preiswerter und die Schaltung wird weniger störanfällig, weil sie schmalbandiger wird. Außerdem treten keine Schwierigkeiten durch Laufzeiten innerhalb der Leiter auf.

Durch die Isolierung besteht aber kein linearer Zusammenhang zwischen Bodenwassergehalt und Dielektrizitätskonstante mehr, sondern die Abhängigkeit zwischen Kapazität und rel. volumetrischen Wassergehalt nimmt eine Form an, wie sie in Fig. 4 dargestellt ist (4 Meßreihen). Die hohe Anfangssteigung der Kurve zeigt, daß die Anordnung gerade für niedrige Werte an Bodenwassergehalt eine hohe Empfindlichkeit aufweist.

### Auswerteelektronik

Die Kapazitäten der Kondensatoren 12, (siehe Fig. 5) mit der gegebenen Elektrodenanordnung haben eine Größe von etwa 10 pF. Es ist deshalb notwendig, den Kondensator ohne lange Zuleitung 13 an die Elektronik anzuschließen, da Leitungen ebenfalls eine Kapazität zwischen 0.3 und 3 pF/cm haben.

Bei Sonden im Boden muß daher auch die Elektronik zur Signalerzeugung 3 in den Boden und es empfiehlt sich, eine möglichst einfache Anordnung dafür zu wählen und für eine sichere Signalübertragung zu sorgen. Deshalb wird in 3 ein Digitales Signal erzeugt, das vorzugsweise über einen optischen Leiter 4 zur Auswerteelektronik 6 übertragen wird. Die Stromversorgung von 3 erfolgt über die Leitungen 5 oder über eine Batterie in 3.

Als Signalgenerator 3 dient im einfachsten Fall der Pulsgenerator 7 in Fig. 8b. Die Pulslänge Tₘ wird demnach durch den Kondensator 12 und den Widerstand 9 bestimmt und die Zeit zwischen den Impulsen T_{d} durch den Widerstand 10 und den Kondensator 11. T_{d} kann auch noch eine weitere Information übertragen, z.B. die Temperatur, wenn Widerstand 10 temperaturabhängig ist. Das digitale Signal 8 wird mit der Diode in ein optisches Signal umgewandelt, das dann über Lichtleiter ohne Störungen zur eigentlichen Auswerteelektronik weitergeleitet werden kann.

Anwendungen ergeben sich in der Wassergehaltbestimmung im Boden mit der Bewässerungsteuerung im Gewächshaus und auch auf Ackerflächen. Darüberhinaus muß bei der Lagerung auf die Feuchtigkeit geachtet werden (Heu, Getreide). Auch bei der Produktion spielt die korrekte Einstellung der Feuchtigkeit eine Rolle (Tabak).

### Literatur:

1. M.Amato & J.T.Ritchie (1995) Small spatial scale water content measurement with time-domain reflectometry, Soil-Sci.Soc.Am.J. 59, 325-329.
2. Brisco et al. (1992): Soil moisture measurement using portable dielectric probes and time domain reflectometry, Water Resources Res. 28, 1339-1346.
3. Campbell (1990): Dielectric properties and influence of conductivity in soils at one to fifty megahertz, Soil Sci. Soc. Am. J. 54, 332-341.
4. S.Dasberg and N. Dalton (1985), Time domain reflectometry filed measurements of soil water content and electrical conductivity, Soil Sci. Soc.Am.J. 49,293-297.
5. Dean, J.P. Bell, and A.J.B. Baty (1987): soil moisture measurement by improved capacitance technique, part I. Sensor design and performance, J. Hydrology 93, 67-78.
6. Evett & J.L. Steiner (1995): Precision of neutron scattering and capacitance type soil water content gauges from filed calibration, Soil Sci. Soc. Am. J. 59, 961-968.
7. Fellner-Feldegg (1969): The measurements of the dielectrics in the time domain, J Phys. Chem 73, 616-623.
8. Gardner, C.M.K., J.P. Bell, J.D. Cooper, T.J. Dean, M.G. Hodnett, and N. Gardner. 1991. soil water content. p. 1-73. in K.A. Smith & C.E. Mullins (ed.) Soil Analysis: Physical Methods. Marcel Dekker, New York.
9. S.F.Kelly, J.S. Selker, and J.L. Green (1995), Using short soil moisture probes with high-bandwidth time domain reflectometry instruments, Soil Sci.Soc.Am.J. 59:97-102.
10.Nadler & Y. Lapid (1996), An improved capacitance sensor for in-situ monitoring of soil-moisture, Austr. J. Soil Res. 34, 361-368.
11.Ould Mohamed, P. Bertuzzi, A. Bruand, and L. Bruckler (1997), Field evaluation and error analysis of soil water content measurement using the capacitance probe method, Soil Sci. Soc. Am. J. 61:399-408.
12.de Plater (1955): A portable capacitance-type soil moisture meter, Soil Science 80, 391-395.
13.Sarabandi & E.S. Li (1994), Characterisation of soil moisture using a microstrip resonator,
14.IGARSS'94 - International Geoscience and Remote Sensing Symposium, Pasadena, California USA, 8.-12. Aug. 1994, 1445-1447.
15.T.J.Schmugge, T.J. Jackson, and H.L. McKim (1980), Survay of methods for soil moisure determination, Water Resours. Res. 16, 961-979.
16.Smith & C.E. Mullins (Edts.) (1991), Soil Analysis, Physical Methods, Marcel Dekker, New York Basel Hong Kong.
17.G.C.Topp, J.L.Davis, and A.P.Annan (1982), Electromagnetic determination of soil water content using TDR: I. Applications to wetting fronts and steep gradients, Soil Sci.Soc.Am.J. 46, 672-678.
18.Wobschall (1978) A frequency shift dielectric soil moisture sensor, IEEE GE-16, 112-118.

## Patentansprüche

1. Sensor zur Wassergehaltsbestimmung bestehend aus mindestens zwei sich gegenüberliegenden Kondensatorelektroden mit Zuleitungen, wobei
a) die Länge der Kondensatorelektroden (1) mindestens zehnmal größer ist als die größte Querschnittsabmessung,
b) der Abstand der Kondensatorelektroden (1) voneinander mindestens gleich der Querschnittsabmessung in Richtung ihres Abstandes ist, wobei die Dicke des Meßvolumens durch den Abstand der Kondensatorelektroden (1) eingestellt ist und
c) die Kondensatorelektroden (1) in einer Fläche (2) angeordnet sind,
dadurch gekennzeichnet, daß
d) die Kondensatorelektroden (1) über einen Rahmen gespannte Drähte sind, wobei die Drähte ein Drahtgitter über einer Rahmenöffnung bilden und wobei die Drähte der beiden Kondensatorelektroden (1) sich in ihrer Reihenfolge abwechseln.

2. sensor nach Anspruch 1, dadurch gekennzeichnet, daß die Drähte mit einer mechanischen Spannung am Rahmen befestigt sind.

3. sensor nach Anspruch 2, dadurch gekennzeichnet, daß die mechanische Spannung zwischen 1 N/mm und 20 N/mm liegt.

4. Sensor nach einem der Ansprüche 1 bis 3, gekennzeichnet durch mindestens einen weiteren Draht als Kondensatorelektrode (1) wodurch mindestens zwei Elektrodenabstände und damit zwei verschiedene Dicken des Meßvolumens realisiert sind.

5. Sensor nach einem der Ansprüche 1 bis 4, dadurch gekennzeichnet, daß die Drähte isoliert sind.

6. Verwendung mindestens eines Sensors gemäß einem der Ansprüche 1 bis 5 zur Messung des Wassergehalts in Böden, wobei der Sensor waagrecht liegt.

## Claims

1. Sensor for determining water content, comprising at least two oppositely situated capacitor electrodes provided with supply lines, wherein
a) the length of the capacitor electrodes (1) is at least ten times greater than the greatest cross-sectional dimension,
b) the spacing between the capacitor electrodes (1) is at least identical to the cross-sectional dimension when viewed with respect to the direction of their spacing, the thickness of the measuring volume being set by the spacing between the capacitor electrodes (1), and
c) the capacitor electrodes (1) are disposed in a face (2),
characterised in that
d) the capacitor electrodes (1) are wires which are tensioned over a frame, the wires forming a wire lattice above a frame opening, and the wires of the two capacitor electrodes (1) alternating in respect of their sequence.

2. Sensor according to claim 1, characterised in that the wires are secured on the frame with a mechanical tension.

3. Sensor according to claim 2, characterised in that the mechanical tension lies between 1 N/mm and 20 N/mm.

4. Sensor according to one of claims 1 to 3, characterised by at least one additional wire as the capacitor electrode (1), whereby at least two electrode spacings and, hence, two different thicknesses of the measuring volume are achieved.

5. Sensor according to one of claims 1 to 4, characterised in that the wires are insulated.

6. Use of at least one sensor according to one of claims 1 to 5 for measuring the water content in soils, the sensor lying horizontally.

## Revendications

1. Capteur pour la détermination de la teneur en eau, constitué d'au moins deux électrodes de condensateur disposées face à face et de conducteurs dans lequel,
a) la longueur des électrodes de condensateur (1) est au moins dix fois plus grande que la plus grande dimension de leur section,
b) l'espacement des électrodes (1) l'une de l'autre est au moins égal à la dimension de leur section selon la direction de leur espacement, l'épaisseur du volume de mesure étant réglée par l'espacement des électrodes (1), et
c) les électrodes (1) sont disposées en une surface (2),
caractérisé en ce que
d) les électrodes de condensateur (1) sont des fils tendus sur un cadre, de manière à former une grille de fils étendue sur une ouverture de cadre, les fils des deux électrodes (1) se succédant en alternance.

2. Capteur selon la revendication 1,
caractérisé en ce que
les fils sont fixés sur le cadre avec une tension mécanique.

3. Capteur selon la revendication 2,
caractérisé en ce que
la tension mécanique est comprise entre 1 N/mm et 20 N/mm.

4. Capteur selon l'une quelconque des revendications 1 à 3,
caractérisé en ce qu'
au moins un autre fil constitue une électrode de condensateur (1), par laquelle sont réalisés au moins deux espacements d'électrodes et donc deux épaisseurs différentes du volume de mesure.

5. Capteur selon l'une quelconque des revendications 1 à 4,
caractérisé en ce que
les fils sont isolés.

6. Utilisation d'au moins un capteur selon l'une quelconque des revendications 1 à 5,
pour mesurer la teneur en eau dans des sols, le capteur étant placé horizontalement.
